# EUROPÄISCHE PATENTSCHRIFT

(11) **EP 4 520 467 B1**
(45) Veröffentlichungstag und Bekanntmachung des Hinweises auf die Patenterteilung: **04.11.2026**
(21) Anmeldenummer: 23196147.5
(22) Anmeldetag: 08.09.2023
(51) Int. Cl.: B23K 9/28

(54) **WERKZEUGLOS MONTIERBARER PISTOLENGRIFF FÜR EINEN SCHWEISSBRENNER**
TOOL-FREE MOUNTABLE GUN HANDLE FOR A WELDING TORCH
POIGNÉE DE PISTOLET DE SOUDAGE POUVANT ÊTRE MONTÉE SANS OUTIL

(43) Veröffentlichungstag der Anmeldung: 12.03.2025
(73) Patentinhaber: EWM GmbH, 56271 Mündersbach (DE)
(72) Erfinder: Vetten, Adrian, 57629 Steinebach (DE); König, Mario, 56412 Nentershausen (DE)
(74) Vertreter: Cohausz & Florack

(56) Entgegenhaltungen:
- WO-A1-02/34450
- DE-U1- 202010 014 600
- US-A1- 2018 229 326

## Beschreibung

Die vorliegende Erfindung betrifft einen Pistolengriff für einen Schweißbrenner mit einem Pistolengriffkörper, der eine Grifffläche zum Greifen des Pistolengriffs mit einer Hand aufweist, und mit einer Montagekontur zur Montage des Pistolengriffs an einem Schweißbrenner, insbesondere einer Schweißbrenner-Griffschale, sowie ein System mit einer Schweißbrenner-Griffschale und/oder einem Schweißbrenner und einem solchen Pistolengriff.

Aus dem Stand der Technik sind Pistolengriffe für Schweißbrenner, insbesondere für Lichtbogenschweißbrenner, bekannt (siehe z.B. die WO 02/34450 oder die DE 20 2010 014600 U1), die zum Beispiel an einen Schweißbrenner angeschraubt werden können (s. DE 20 2010 014600 U1). Die Verwendung derartiger Pistolengriffe an einem Schweißbrenner hat den Vorteil, dass der Schweißbrenner sich in bestimmten Schweißsituationen besser handhaben lässt. Es gibt jedoch auch Schweißsituationen, in denen ein Pistolengriff die Handhabung des Schweißbrenners erschwert, zum Beispiel weil er in beengten Situationen im Weg ist oder das Gewicht des Schweißbrenners erhöht. Daher werden in manchen Schweißsituationen mehrere Schweißbrenner mit und ohne Pistolengriff verwendet, zwischen denen der Schweißer bei Bedarf wechselt.

Vor diesem Hintergrund liegt der vorliegenden Erfindung die Aufgabe zu Grunde, eine einfachere Durchführung des Schweißvorgangs für unterschiedliche Schweißsituationen zu ermöglichen.

Die zuvor genannte Aufgabe wird erfindungsgemäß gelöst durch einen Pistolengriff für einen Schweißbrenner mit einem Pistolengriffkörper, der eine Grifffläche zum Greifen des Pistolengriffs mit einer Hand aufweist, und mit einer Montagekontur zur Montage des Pistolengriffs an einem Schweißbrenner, insbesondere einer Schweißbrenner-Griffschale, vorgesehen sind, und wobei der Pistolengriff eine manuell betätigbare Befestigungsbetätigung zum Entriegeln und/oder Verriegeln der Befestigungsmittel aufweist. Durch das Vorsehen von Befestigungsmitteln zur werkzeuglosen Befestigung des Pistolengriffs an einem Schweißbrenner kann der Pistolengriff durch den Schweißer schnell und einfach bei Bedarf am Schweißbrenner montiert und bei Bedarf wieder abgenommen werden, so dass ein Wechsel zwischen Schweißbrenner mit und ohne Pistolengriff entfallen kann. Der Pistolengriff weist einen Pistolengriffkörper auf. Der Pistolengriffkörper kann zum Beispiel aus zwei miteinander verbundenen Halbschalen gebildet sein. Vorzugsweise ist der Pistolengriffkörper aus Kunststoff gebildet.

Der Pistolengriffkörper weist eine Grifffläche zum Greifen des Pistolengriffs mit einer Hand auf. Vorzugsweise weist die Grifffläche eine hintere Teilfläche zur Positionierung des Handballens und/oder der Handfläche einer Hand und eine vordere Teilfläche zur Positionierung der Finger einer Hand auf. Die Grifffläche kann an eine bestimmungsgemäß vorgegebene Handausrichtung angepasst sein, beispielsweise Erhebungen und/oder Vertiefungen zur erleichterten bestimmungsgemäßen Positionierung ein oder mehrerer Finger an der Grifffläche aufweisen.

Der Pistolengriff weist eine Montagekontur zur Montage des Pistolengriffs an einen Schweißbrenner auf. Insbesondere kann die Montagekontur durch einen oberen Bereich des Pistolengriffkörpers gebildet werden.

Der Pistolengriff weist Befestigungsmittel zur werkzeuglosen Befestigung des Pistolengriffs an einem Schweißbrenner, insbesondere einer Schweißbrenner-Griffschale, auf. Die Befestigungsmittel sind insbesondere werkzeuglos betätigbar, insbesondere manuell betätigbar. Insbesondere können die Befestigungsmittel ein oder mehrere mechanische Befestigungselemente umfassen, die werkzeuglos zwischen einer Verriegelungsstellung zum Halten des Pistolengriffs an einem Schweißbrenner, insbesondere an einer Schweißbrenner-Griffschale, und einer Entriegelungsstellung zum Lösen des Pistolengriffs von dem Schweißbrenner, insbesondere der Schweißbrenner-Griffschale, verstellt werden können. Die Befestigungsmittel sind vorzugsweise im Bereich der Montagekontur angeordnet.

Die zuvor genannte Aufgabe wird erfindungsgemäß weiterhin gelöst durch ein System mit einer Schweißbrenner-Griffschale und/oder einem Schweißbrenner und mit dem zuvor beschriebenen Pistolengriff oder einer Ausführungsform davon, wobei der Pistolengriff dazu ausgebildet ist, an der Schweißbrenner-Griffschale und/oder am Schweißbrenner befestigt zu werden.

Bei dem Schweißbrenner handelt es sich vorzugsweise um einen Schweißbrenner für das Lichtbogenschweißen, insbesondere für das Metall-Schutzgas-Schweißen (MSG-Schweißen), beispielsweise Metall-Inertgas-Schweißen (MIG-Schweißen) oder Metall-Aktivgas-Schweißen (MAG-Schweißen). Bei der Schweißbrenner-Griffschale handelt es sich vorzugsweise um eine Schweißbrenner-Griffschale für einen solchen Schweißbrenner.

Der Pistolengriff ist dazu ausgebildet, an der Schweißbrenner-Griffschale und/oder am Schweißbrenner befestigt zu werden.

Zu diesem Zweck ist die Montagekontur vorzugsweise an eine korrespondierende Montagegegenkontur der Schweißbrenner-Griffschale und/oder des Schweißbrenners angepasst, um den Pistolengriff an der Schweißbrenner-Griffschale und/oder am Schweißbrenner anordnen zu können.

Weiterhin sind vorzugsweise die Befestigungsmittel des Pistolengriffs derart an die Schweißbrenner-Griffschale und/oder den Schweißbrenner angepasst, dass der Pistolengriff mit den Befestigungsmitteln an der Schweißbrenner-Griffschale und/oder dem Schweißbrenner befestigbar ist. Die Befestigungsmittel des Pistolengriffs können insbesondere ein oder mehrere Befestigungselemente aufweisen, die mit korrespondierenden Befestigungs-Gegenelementen an der Schweißbrenner-Griffschale und/oder am Schweißbrenner derart wechselwirken, dass der Pistolengriff an der Schweißbrenner-Griffschale und/oder am Schweißbrenner gehalten wird, vorzugsweise formschlüssig.

Im Folgenden werden verschiedene Ausführungsformen des Pistolengriffs und des Systems beschrieben, wobei die einzelnen Ausführungsformen jeweils unabhängig voneinander für den Pistolengriff und das System gelten. Darüber hinaus können die einzelnen Ausführungsformen beliebig miteinander kombiniert werden.

Erfindungsgemäß weist der Pistolengriff eine manuell betätigbare Befestigungsbetätigung zum Entriegeln und/oder Verriegeln der Befestigungsmittel auf. Die Befestigungsbetätigung umfasst vorzugsweise ein manuell bedienbares mechanisches Befestigungsbetätigungselement, beispielsweise einen mechanischen Taster, einen mechanischen Schalter oder einen Hebel, dessen Betätigung eine Entriegelung und/oder Verriegelung der Befestigungsmittel bewirkt, insbesondere ein Verstellen von ein oder mehreren Befestigungselementen der Befestigungsmittel in eine Entriegelungsstellung und/oder Verriegelungsstellung. Durch das Vorsehen der Befestigungsbetätigung kann eine werkzeuglose Betätigung der Befestigungsbetätigung zu den Befestigungsmitteln übertragen werden. Der Ort der Betätigung kann durch die Positionierung der Befestigungsbetätigung somit flexibler gewählt und zum Beispiel ergonomischer oder einfacher für eine Bedienerhand erreichbar positioniert werden.

Es kann ein Federelement, beispielsweise eine Spiralfeder oder ein federelastisches Element, vorgesehen sein, das die Befestigungsbetätigung federbelastet, vorzugsweise eine zur Verriegelungsstellung gerichtete Kraft auf die Befestigungsbetätigung ausübt.

Die Befestigungsbetätigung kann insbesondere einen um eine Achse des Pistolengriffs, insbesondere des Pistolengriffkörpers, drehbar gelagerte Befestigungsbetätigungshebel aufweisen, der an einer Hebelseite eine Betätigungsfläche zur manuellen Betätigung und an einer anderen Hebelseite ein Befestigungselement der Befestigungsmittel aufweist, beispielsweise einen Haken, oder mit einem solchen Befestigungselement verbunden ist.

Bei einer Ausführungsform weist der Pistolengriff eine manuell betätigbare Brennertasterbetätigung auf, die dazu ausgebildet ist, eine Betätigung der Brennertasterbetätigung zu übertragen, insbesondere auf einen Brennertaster eines Schweißbrenners, wenn der Pistolengriff an dem Schweißbrenner montiert ist.

Vorzugsweise ist am Schweißbrenner und/oder an der Schweißbrenner-Griffschale ein Brennertaster vorgesehen und die Brennertasterbetätigung ist dazu ausgebildet, eine Betätigung der Brennertasterbetätigung auf den Brennertaster zu übertragen, wenn der Pistolengriff am Schweißbrenner und/oder an der Schweißbrenner-Griffschale befestigt ist.

Unter einem Brennertaster wird vorliegend insbesondere ein Taster im engeren Sinne verstanden, der nach dem Loslassen selbsttätig in die Ausgangslage zurückkehrt. Daneben wird unter einem Brennertaster auch ein Taster im weiteren Sinne verstanden, zum Beispiel ein einrastender Taster, der nach Betätigung in einer eingerasteten Stellung verbleibt und zum Beispiel erst nach erneuter Betätigung wieder in die Ausgangslage zurückkehrt. In der Praxis wird ein solcher Brennertaster auch als Brennerschalter bezeichnet, der vorliegend vom Begriff Brennertaster mitumfasst ist.

Die Brennertasterbetätigung weist vorzugsweise ein mechanisches Brennertasterbetätigungselement auf, beispielsweise einen mechanischen Taster, einen mechanischen Schalter oder einen Hebel, dessen Betätigung eine Betätigung des Brennertasters am Schweißbrenner und/oder an der Schweißbrenner-Griffschale bewirkt, wenn der Pistolengriff am Schweißbrenner und/oder an der Schweißbrenner-Griffschale befestigt ist. Auf diese Weise kann der Schweißbrenner mit einer Hand am Pistolengriff bedient werden.

Es kann ein Federelement, beispielsweise eine Spiralfeder oder ein federelastisches Element, vorgesehen sein, das die Brennertasterbetätigung federbelastet, vorzugsweise eine zur unbetätigten Stellung gerichtete Kraft auf die Brennertasterbetätigung ausübt.

Die Brennertasterbetätigung kann insbesondere einen um eine Achse des Pistolengriffs, insbesondere des Pistolengriffkörpers, drehbar gelagerte Brennertasterbetätigungshebel aufweisen, der an einer Hebelseite eine Betätigungsfläche zur manuellen Betätigung und an einer anderen Hebelseite eine Aktuatorfläche zur Betätigung eines Brennertaster am Schweißbrenner und/oder an der Schweißbrenner-Griffschale aufweist.

Bei einer Ausführungsform weist der Pistolengriff einen manuell betätigbaren Brennertaster sowie Übertragungsmittel zur Übertragung einer Betätigung des Brennertasters, insbesondere eines elektrischen Signals, auf den Schweißbrenner bzw. die Schweißbrenner-Griffschale auf.

Bei den Übertragungsmitteln kann es sich insbesondere um mit dem Brennertaster elektrisch verbundene Kontaktierungsmittel zur elektrischen Kontaktierung komplementärer Kontaktierungsmittel am Schweißbrenner bzw. an der Schweißbrenner-Griffschale handeln. Der Pistolengriff weist entsprechend vorzugsweise einen manuell betätigbaren Brennertaster sowie mit dem Brennertaster elektrisch verbundene Kontaktierungsmittel zur elektrischen Kontaktierung komplementärer Kontaktierungsmittel am Schweißbrenner bzw. an der Schweißbrenner-Griffschale auf.

Der Brennertaster kann beispielsweise als Mikrotaster oder Mikroschalter ausgebildet sein. Die Kontaktierungsmittel können insbesondere im Bereich der Montagekontur angeordnet sein.

Der Schweißbrenner bzw. die Schweißbrenner-Griffschale weisen vorzugsweise korrespondierende Empfangsmittel zum Empfang der Übertragung von den Übertragungsmitteln auf. Insbesondere weist der Schweißbrenner bzw. die Schweißbrenner-Griffschale des Systems vorzugsweise komplementäre Kontaktierungsmittel auf, die derart angeordnet und ausgebildet sind, um von den Kontaktierungsmitteln am Pistolengriff kontaktiert zu werden. Die komplementären Kontaktierungsmittel können insbesondere im Bereich der Montagegegenkontur angeordnet sein.

Mit den Kontaktierungsmitteln bzw. komplementären Kontaktierungsmitteln kann die Betätigung des Brennertasters am Pistolengriff elektrisch auf den Schweißbrenner bzw. die Schweißbrenner-Griffschale übertragen werden, so dass durch Betätigung des Brennertasters am Pistolengriff zum Beispiel ein Schweißprozess gestartet oder beendet werden kann.

Der Schweißbrenner bzw. die Schweißbrenner-Griffschale kann neben den Empfangsmitteln bzw. komplementären Kontaktierungsmitteln noch einen Brennertaster aufweisen, der zum Beispiel verwendbar ist, wenn der Pistolengriff nicht am Schweißbrenner bzw. an der Schweißbrenner-Griffschale montiert ist. Die komplementären Kontaktierungsmittel können zum Beispiel zu einem Brennertaster am Schweißbrenner bzw. an der Schweißbrenner-Griffschale parallelgeschaltet sein.

Die Kontaktierungsmittel des Pistolengriffs und/oder die komplementären Kontaktierungsmittel können zum Beispiel in Form von Kontaktflächen oder Kontaktstiften, insbesondere federgelagerten Kontaktstiften, ausgebildet sein.

Die Kontaktierungsmittel des Pistolengriffs und/oder die komplementären Kontaktierungsmittel sind vorzugsweise so angeordnet, dass sie sich bei einer Montage des Pistolengriffs am Schweißbrenner bzw. an der Schweißbrenner-Griffschale, zum Beispiel bei einem Verschwenken des Pistolengriffs von einer Montagezwischenstellung in eine Montageendstellung, kontaktieren, so dass eine Betätigung des Brennertasters am Pistolengriff elektrisch übertragen werden kann.

Bei einer Ausführungsform sind die Befestigungsbetätigung und/oder die Brennertasterbetätigung derart zur Grifffläche angeordnet, dass die Befestigungsbetätigung und/oder die Brennertasterbetätigung mit einer Hand betätigbar sind, insbesondere mit einer Hand, die den Pistolengriff an der Grifffläche ergriffen hat.

Auf diese Weise können die Befestigungsbetätigung und/oder die Brennertasterbetätigung mit einer Hand betätigt werden, insbesondere wenn diese den Pistolengriff an der Grifffläche ergriffen hat, wodurch die Handhabung vereinfacht wird.

Die Brennertasterbetätigung kann beispielsweise im Bereich einer vorderen Teilfläche der Grifffläche angeordnet sein, insbesondere in einer zur Ablage eines Fingers, insbesondere Zeigefingers, vorgesehenen Teilfläche. Auf diese Weise kann der Schweißer die Brennertasterbetätigung zur Betätigung des Brennertasters am Schweißbrenner im Schweißbetrieb einfach, sicher und ergonomisch betätigen.

Die Befestigungsbetätigung kann beispielsweise im Bereich einer hinteren Teilfläche der Grifffläche angeordnet sein. Auf diese Weise kann ein unbeabsichtigtes Betätigen der Befestigungsbetätigung mit einem Finger und damit ein unbeabsichtigtes Lösen des Pistolengriffs vom Schweißbrenner und/oder von der Schweißbrenner-Griffschale verhindert werden, da die Befestigungsbetätigung außerhalb eines für einen Finger der Hand vorgesehenen Anlagebereichs angeordnet ist und der Nutzer einen Finger gezielt zur Befestigungsbetätigung bewegen muss, um die Befestigungsbetätigung zu betätigen.

Gleichzeitig ist die Befestigungsbetätigung auf diese Weise einfach zugänglich, wodurch das Montieren und/oder Demontieren des Pistolengriffs vereinfacht wird.

Bei einer Ausführungsform umfasst die Befestigungsmittel zur werkzeuglosen Befestigung des Pistolengriffs ein oder mehrere Formschlusselemente zur formschlüssigen Befestigung des Pistolengriffs an einem Schweißbrenner. Die ein oder mehreren Formschlusselemente können beispielsweise ein oder mehrere Rasthaken umfassen. Der Schweißbrenner und/oder die Schweißbrenner-Griffschale weisen vorzugsweise korrespondierende Formschlusselemente, beispielsweise korrespondierende hinterschnittene Gegenflächen für ein oder mehrere Rasthaken auf.

Bei einer Ausführungsform weisen die Befestigungsmittel ein oder mehrere erste Befestigungselemente zum Einführen in korrespondierende Befestigungselemente eines Schweißbrenners in eine Montagezwischenstellung auf, wobei die ein oder mehrere ersten Befestigungselemente dazu ausgebildet sind, dass der Pistolengriff aus der Montagezwischenstellung in eine Montageendstellung verschwenkbar ist. Weiter weisen die Befestigungsmittel ein oder mehrere zweite Befestigungselemente auf, die dazu ausgebildet sind, den Pistolengriff in der Montageendstellung am Schweißbrenner zu halten. Die ermöglicht eine einfachere Montage des Pistolengriffs. Insbesondere kann der Pistolengriff auf diese Weise zunächst mit den ein oder mehrere ersten Befestigungselementen in der Montagezwischenstellung am Schweißbrenner bzw. an der Schweißbrenner-Griffschale vormontiert und dann durch Verschwenken des Pistolengriffs am Schweißbrenner bzw. an der Schweißbrenner-Griffschale befestigt werden.

Die ein oder mehrere ersten Befestigungselemente können beispielsweise ein oder mehrere Achsenelemente umfassen, die in korrespondierende Achsen-Aufnahmen am Schweißbrenner, insbesondere an der Schweißbrenner-Griffschale eingeführt werden können, so dass der Pistolengriff um eine durch die ein oder mehreren Achsenelemente definierte Achse verschwenkbar ist.

Die ein oder mehrere zweiten Befestigungselemente können beispielsweise ein oder mehrere Rastelemente, zum Beispiel Rasthaken, umfassen, die beim Verschwenken in die Montageendstellung mit entsprechenden Gegenflächen am Schweißbrenner, insbesondere an der Schweißbrenner-Griffschale verrasten, so dass der Pistolengriff am Schweißbrenner bzw. an der Schweißbrenner-Griffschale fixiert wird.

Bei einer Ausführungsform weist der Pistolengriff ein Magazin auf, das durch eine Magazinöffnung im Pistolengriffkörper in eine im Pistolengriffkörper vorgesehene Magazinaufnahme eingesetzt und/oder einsetzbar ist, wobei das Magazin zur Aufnahme von Zubehör ausgebildet ist. Auf diese Weise kann im Pistolengriffkörper Zubehör untergebracht werden, das somit bei Bedienung des Schweißbrenners unmittelbar zur Verfügung steht. Bei dem Zubehör kann es sich beispielsweise um Werkzeug, insbesondere einen Brennerschlüssel, und/oder um Ersatzteile, insbesondere von Verschleißteilen des Schweißbrenners, handeln. Auf diese Weise können manuelle Einstellungen bzw. Reparaturen am Brenner schnell und einfach direkt vor Ort mit dem richtigen Werkzeug bzw. den richtigen Ersatzteilen durchgeführt werden.

Die Magazinöffnung ist vorzugsweise auf einer der Montagekontur gegenüberliegenden Seite des Pistolengriffs, insbesondere auf einer Unterseite des Pistolengriffs, angeordnet. Auf diese Weise kann das Magazin bequem entnommen bzw. eingesetzt werden, ohne mit dem Schweißbrenner zu kollidieren.

Bei einer Ausführungsform weist das Magazin einen Magazindeckel auf, der die Magazinöffnung im Pistolengriffkörper verschließt, wenn das Magazin in die Magazinaufnahme eingesetzt ist. Auf diese Weise kann das Magazin sicher im Pistolengriffkörper untergebracht werden. Weiterhin kann das Magazin auf diese Weise vor Staub und Dämpfen geschützt werden.

Bei einer Ausführungsform weisen der Pistolengriffkörper und das Magazin komplementäre Magazinbefestigungsmittel auf, die dazu ausgebildet sind, das in die Magazinaufnahme eingesetzte Magazin in der Magazinaufnahme zu befestigen, insbesondere formschlüssig. Auf diese Weise kann das Magazin sicher in der Magazinaufnahme gehalten werden.

Die Magazinbefestigungsmittel können vorzugsweise einen Haken, beispielsweise am Magazin, insbesondere am Magazindeckel, und eine korrespondierende hinterschnittene Gegenfläche, beispielsweise am Pistolengriffkörper, umfassen. Die Magazinbefestigungsmittel sind vorzugsweise werkzeuglos verriegelbar und/oder entriegelbar. Beispielsweise kann ein von den Magazinbefestigungsmitteln umfasster Haken über eine manuell betätigbare Betätigungsfläche entriegelbar sein. Vorzugsweise ist ein Federelement vorgesehen, das den Haken federbelastet, vorzugsweise eine zur verriegelten Stellung des Hakens gerichtete Kraft auf den Haken ausübt.

Bei einer Ausführungsform weist das Magazin Aufnahmen und/oder Befestigungsmittel, beispielsweise Klemmen, für eines oder mehrere der folgenden Zubehörteile auf: Brennerschlüssel, Reinigungsbürste, Stromdüse, Düsenstock, Gasverteiler, sonstige Ersatzteile. Vorzugsweise weist das Magazin eine Aufnahme für einen Brennerschlüssel und ein oder mehrere Befestigungsmittel, beispielsweise Klemmen, für ein oder mehrere Ersatzteile für Verschleißteile, insbesondere ein oder mehrere Stromdüsen und/oder Düsenstocke, auf.

Weitere Merkmale und Vorteile des Pistolengriffs und des Systems ergeben sich aus der nachfolgenden Beschreibung von Ausführungsbeispielen, wobei auf die beigefügte Zeichnung Bezug genommen wird.

In der Zeichnung zeigen
- Fig. 1a-e: ein Ausführungsbeispiel des Pistolengriffs und
- Fig. 2a-e: ein Ausführungsbeispiel des Systems mit dem Pistolengriff aus Fig. 1a-e.

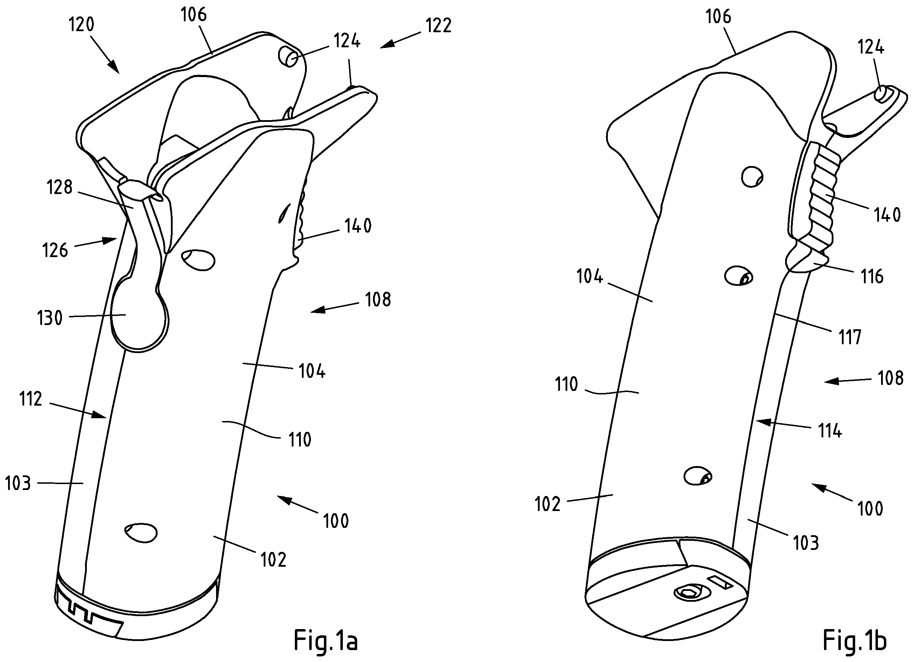

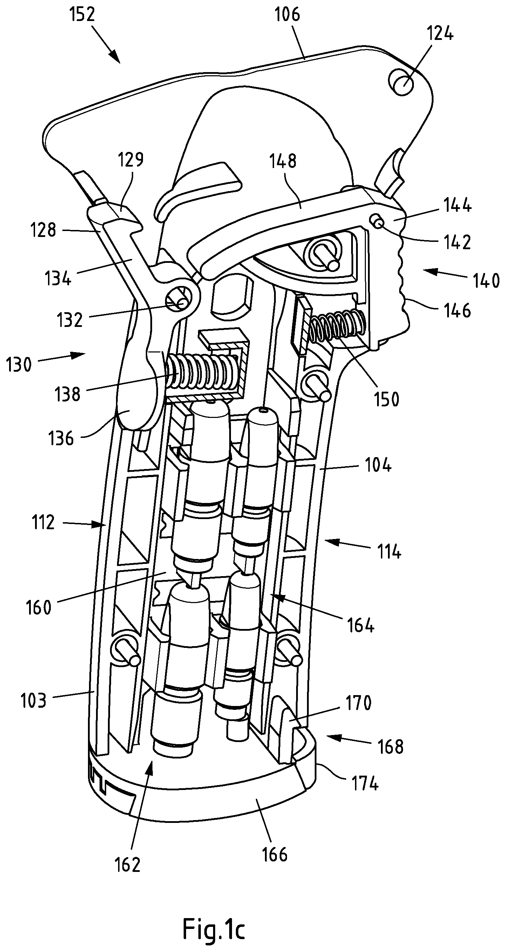

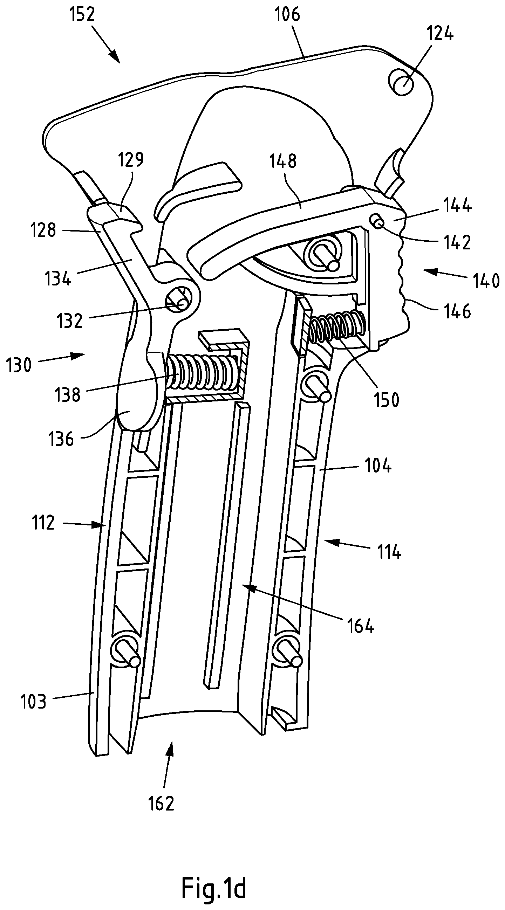

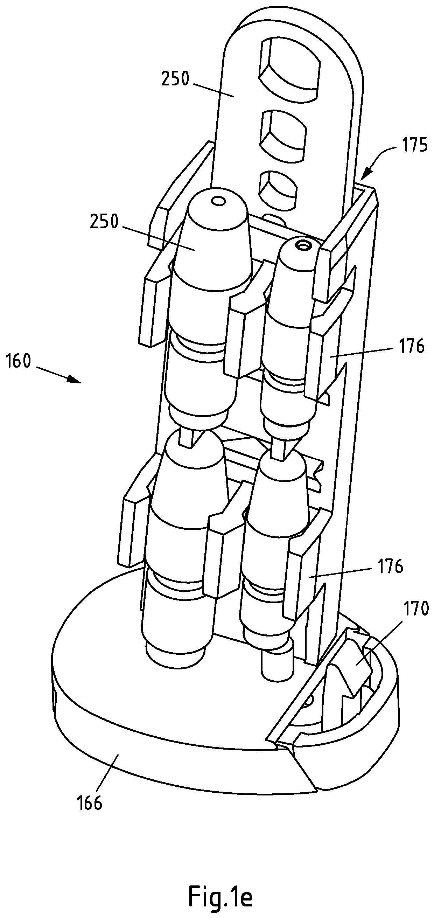

Die Fig. 1a-e. zeigen ein Ausführungsbeispiel des Pistolengriffs in verschiedenen Ansichten. Fig. 1a und Fig. 1b zeigen den Pistolengriff 100 in perspektivischen Seitenansichten von schräg oben (Fig. 1a) und schräg unten (Fig. 1b). Fig. 1c zeigt eine perspektivische Teilansicht des Pistolengriffs 100 mit ausgeblendeter Halbschale 102. Fig. 1d zeigt den Pistolengriff 100 wie in Fig. 1c, jedoch mit entnommenem Magazin 160 und Fig. 1e zeigt das Magazin 160.

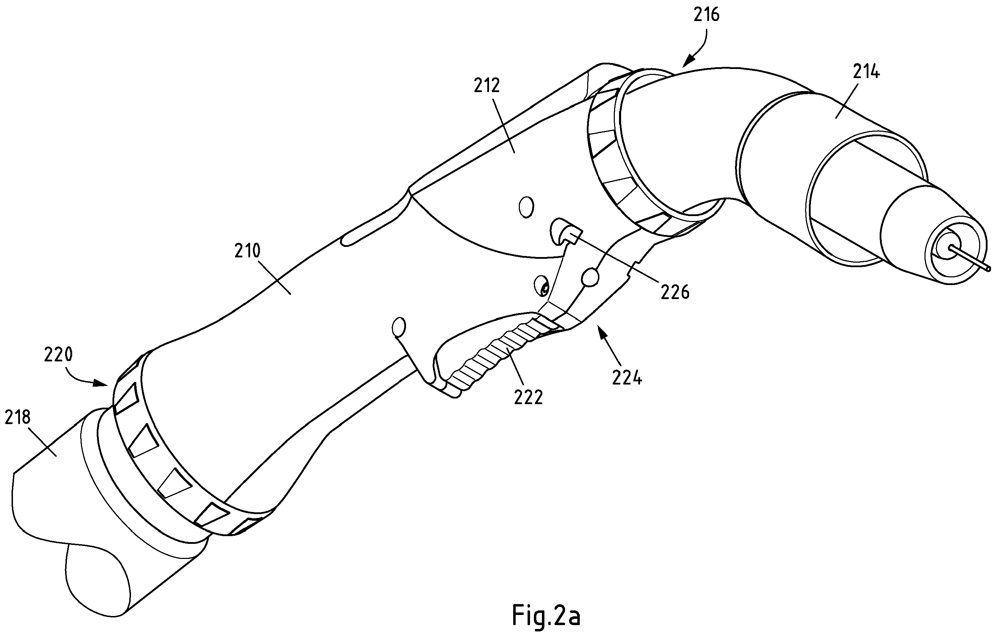

Der Pistolengriff 100 weist einen aus zwei miteinander verschraubten KunststoffHalbschalen 102, 103 gebildeten Pistolengriffkörper 104 auf. Der Pistolengriffkörper 104 weist an einer Oberseite eine Montagekontur 106 zur Montage des Pistolengriffs 100 an einem Schweißbrenner, insbesondere einer Schweißbrenner-Griffschale, auf, beispielsweise am Schweißbrenner 210 bzw. der Schweißbrenner-Griffschale 212 aus Fig. 2a-e.

Unterhalb der Montagekontur 106 weist der Pistolengriffkörper 104 einen Griffbereich 108 mit einer Grifffläche 110 zum Greifen des Pistolengriffs 100 mit einer Hand auf. Die Grifffläche 110 weist eine hintere Teilfläche 112 zur Positionierung der Handfläche und/oder des Handballens einer Hand und eine vordere Teilfläche 114 zur Positionierung der Finger der Hand auf. An der vorderen Teilfläche 114 sind Erhebungen 116 und Vertiefungen 117 vorgesehen, die die richtige Positionierung der Hand am Pistolengriff 100 erleichtern.

Der Pistolengriff 100 weist, im Bereich der Montagekontur 106, weiter Befestigungsmittel 120 zur werkzeuglosen Befestigung des Pistolengriffs an einem Schweißbrenner, beispielsweise am Schweißbrenner 210, insbesondere an einer Schweißbrenner-Griffschale, beispielsweise der Schweißbrenner-Griffschale 212, auf. Die Befestigungsmittel 120 umfassen erste Befestigungselemente 122 in Form von Achsenelementen 124 sowie ein zweites Befestigungselement 126 in Form eines Hakens 128.

Der Pistolengriff 100 weist weiter eine Befestigungsbetätigung 130 in Form eines um eine Achse 132 am Pistolengriffkörper 104 schwenkbar gelagerten Befestigungsbetätigungshebels 134 auf. Der Befestigungsbetätigungshebel 134 weist an einer Hebelseite eine Betätigungsfläche 136 zur manuellen Betätigung und an der anderen Hebelseite den Haken 128 auf. Weiter ist eine am Pistolengriffkörper 104 gelagerte Feder 138 vorgesehen, die auf den Befestigungsbetätigungshebel 134 und damit auf den Haken 128 eine Federkraft in Richtung der Verriegelungsstellung des Hakens 128 ausübt. Die Betätigungsfläche 136 ist im Bereich der hinteren Teilfläche 112 der Grifffläche 110 angeordnet. Dies ermöglicht einen einfachen Zugriff auf die Betätigungsfläche 136 und verhindert gleichzeitig eine versehentliche Betätigung der Betätigungsfläche 136 durch Finger einer den Pistolengriff 100 greifenden Hand, die bei bestimmungsgemäßer Positionierung im Bereich der vorderen Teilfläche 114 anliegen.

Der Pistolengriff 100 weist weiter eine Brennertasterbetätigung 140 in Form eines um eine Achse 142 am Pistolengriffkörper 104 schwenkbar gelagerten Brennertasterbetätigungshebels 144 auf. Der Brennertasterbetätigungshebel 144 weist an einer Hebelseite eine Betätigungsfläche 146 zur manuellen Betätigung und an der anderen Hebelseite eine Aktuatorfläche 148 zur Betätigung eines Brennertasters am Schweißbrenner bzw. an der Schweißbrenner-Griffschale auf. Weiter ist eine am Pistolengriffkörper 104 gelagerte Feder 150 vorgesehen, die auf den Brennertasterbetätigungshebel 144 und damit auf die Aktuatorfläche 148 eine Federkraft in Richtung der unbetätigten Stellung ausübt. Die Betätigungsfläche 146 ist im Bereich der vorderen Teilfläche 114 der Grifffläche 110 angeordnet, und zwar in einem zur Anlage des Zeigefingers einer Hand vorgesehenen Bereich der Teilfläche 114. Dies ermöglicht eine einfache Bedienung des Schweißbrenners durch eine den Pistolengriff 100 greifende Hand.

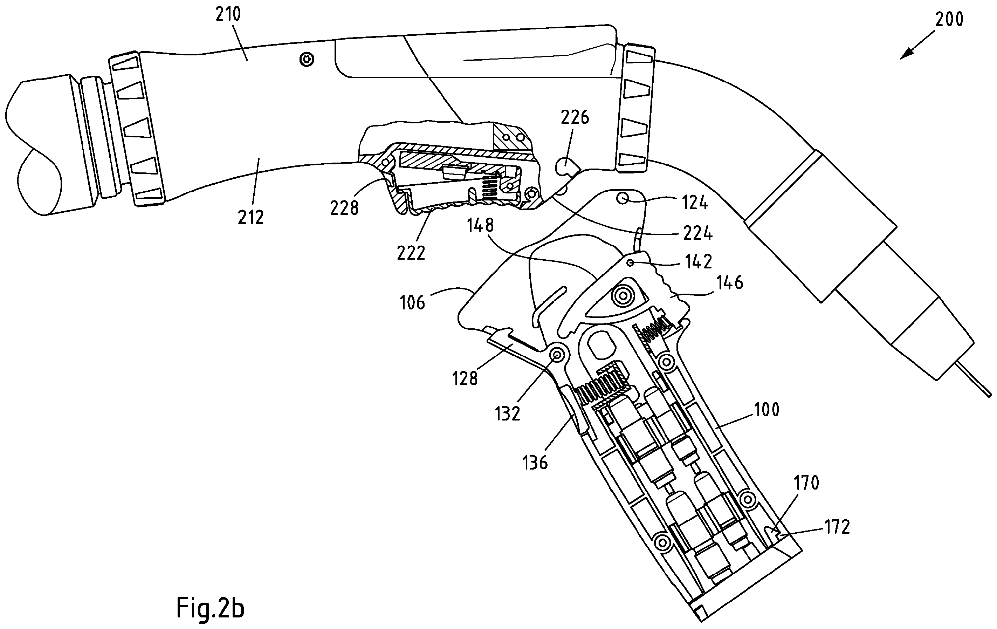

Der Pistolengriff 100 weist optional weiter ein Magazin 160 auf, das durch eine Magazinöffnung 162 in eine im Pistolengriffkörper 104 angeordnete Magazinaufnahme 164 einsetzbar ist. Das Magazin 160 weist einen Magazindeckel 166 auf, der die Magazinöffnung 162 verschließt, wenn das Magazin 160 in die Magazinaufnahme 164 eingesetzt ist. Fig. 1e zeigt eine perspektivische Ansicht des (mit Zubehör bestückten) Magazins 160. Am Magazindeckel 166 und am Pistolengriffkörper 104 sind zueinander komplementäre Magazinbefestigungsmittel 168 in Form eines Hakens 170 am Magazindeckel 166 und einer korrespondierenden Hinterschneidung 172 (s. Fig. 2b) am Pistolengriffkörper 104 vorgesehen, um das Magazin in der Magazinaufnahme 164 zu befestigen. Die Magazinbefestigungsmittel 168 sind werkzeuglos betätigbar. Zu diesem Zweck ist am Magazindeckel 166 eine manuell bedienbare Betätigungsfläche 174 vorgesehen, mit der der Haken 170 und die Hinterschneidung 172 außer Eingriff gebracht werden können, um das Magazin 160 aus der Magazinaufnahme 164 zu entnehmen. Der Haken 170 und die Betätigungsfläche 174 sind derart elastisch ausgebildet, dass auf den Haken 170 eine Federkraft in Richtung einer verriegelten Stellung des Hakens 170 wirkt.

Das Magazin 160 weist eine Aufnahme 175 und Haltemittel 176 für Zubehör 250 auf. Im vorliegenden Ausführungsbeispiel weist das Magazin 160 eine Aufnahme 175 für einen Brennerschlüssel und Haltemittel 176 in Form mehrerer Klemmen für Stromdüsen und/oder Düsenstocke auf.

Auf diese Weise kann das Zubehör 250 im Pistolengriff 100 vorgehalten werden, so dass es zum Einstellen und/oder Reparieren des Schweißbrenners unmittelbar zur Verfügung steht.

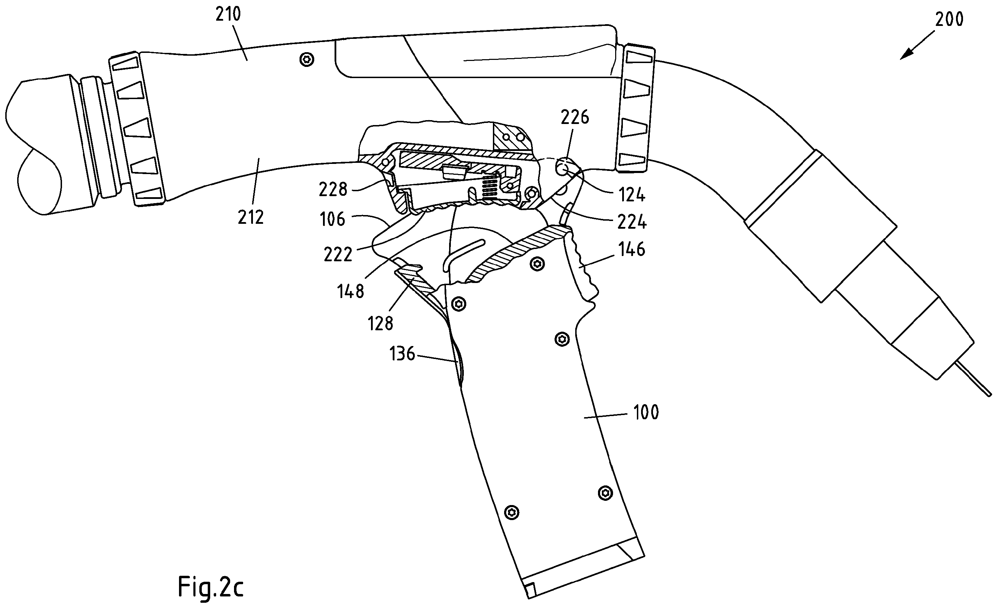

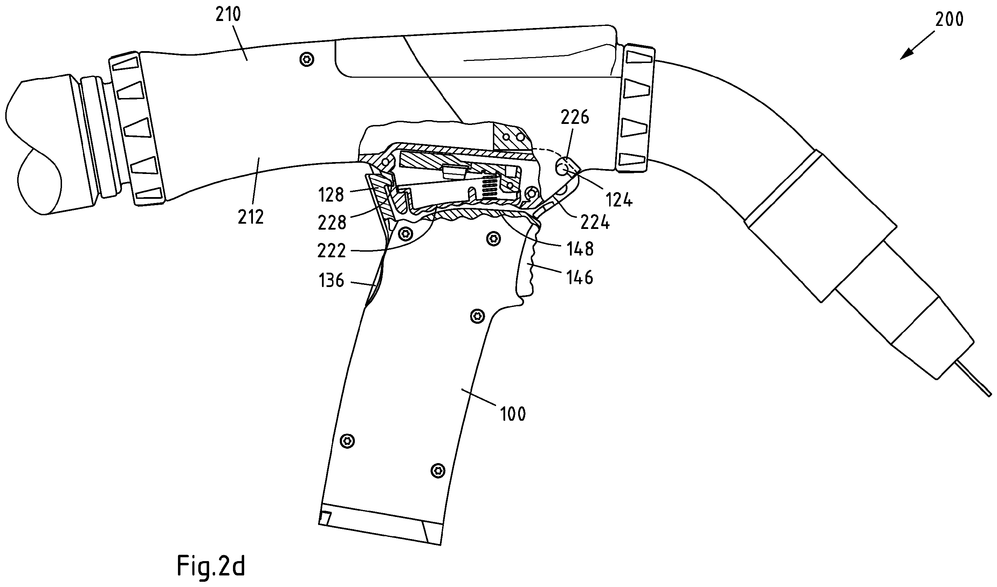

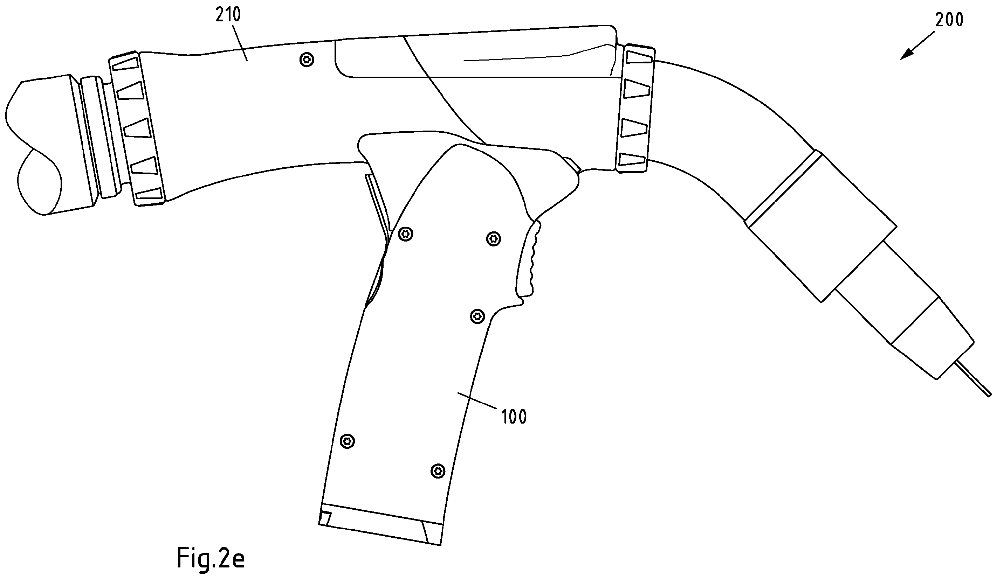

Die Fig. 2a-e zeigen ein Ausführungsbeispiel des Systems 200 in verschiedenen Anordnungen des Pistolengriffs 100 und des Schweißbrenners 210 zueinander. Fig. 2a zeigt den Schweißbrenner 210 in perspektivischer Darstellung. In Fig. 2b sind Pistolengriff 100 und Schweißbrenner 210 - in einer Teilschnittansicht - separat voneinander dargestellt. Fig. 2c und Fig. 2d zeigen weitere Teilschnittansichten des Systems 200, wobei der Pistolengriff 100 und der Schweißbrenner 210 in Fig. 2c in einer Montagezwischenstellung und in Fig. 2d in einer Montageendstellung miteinander verbunden sind. Fig. 2e zeigt eine Seitenansicht des Pistolengriffs 100 und des Schweißbrenners 210 in Montageendstellung.

Das System 200 umfasst den Pistolengriff 100 aus Fig. 1a-e sowie einen Schweißbrenner 210, der eine Schweißbrenner-Griffschale 212, einen Brennervorsatz 214 an einer vordere Seite 216 der Schweißbrenner-Griffschale 212 sowie ein Schlauchpaket 218 an einer hinteren Seite 220 der Schweißbrenner-Griffschale 212 umfasst.

Der Schweißbrenner 210 weist einen Brennertaster 222 auf, der an der Schweißbrenner-Griffschale 212 angeordnet ist. Durch Drücken bzw. Loslassen des Brennertasters 222 kann beispielsweise ein Kontakt geschlossen bzw. geöffnet werden, um einen Schweißvorgang zu starten oder zu beenden. Abhängig von der Konfiguration des Schweißbrenners 210 oder eines mit dem Schweißbrenner verbundenen Schweißgeräts können durch Betätigung des Brennertasters 222 auch weitere Funktionen gesteuert werden, zum Beispiel Schweißparameter eingestellt werden.

Die Schweißbrenner-Griffschale 212 weist eine zu der Montagekontur 106 korrespondierende Montagegegenkontur 224 auf, so dass der Pistolengriff 100 mit der Montagekontur 106 an der Montagegegenkontur 224 der Schweißbrenner-Griffschale 212 angesetzt werden kann.

Im Bereich der Montagegegenkontur 224 weist die Schweißbrenner-Griffschale 212 zu den ersten Befestigungselementen korrespondierende erste Befestigungsgegenelemente 226 auf, die vorliegend als Achsen-Aufnahmen ausgebildet sind, in die die Achsenelemente 124 des Pistolengriffs 100 eingeführt werden können, so dass Pistolengriff 100 und Schweißbrenner-Griffschale 212 in einer Montagezwischenposition zueinander angeordnet sind. Fig. 2c zeigt den Pistolengriff 100 und den Schweißbrenner 210 in der Montagezwischenposition. Der Pistolengriff 100 ist in der Montagezwischenposition um die durch die Achsenelemente 124 definierte Achse zum Schweißbrenner 210 schwenkbar.

Durch Schwenken des Pistolengriffs 100 um die durch die Achsenelemente 124 verlaufende Achse können Pistolengriff 100 und Schweißbrenner 210 in die in Fig. 2d und Fig. 2e dargestellte Montageendstellung gebracht werden, in der der Haken 128 hinter die an der Schweißbrenner-Griffschale 212 vorgesehene Gegenfläche 228 einrastet, so dass der Pistolengriff 100 mit dem Schweißbrenner verbunden ist. Um das Einrasten des Hakens 128 zu erleichtern, weist der Haken eine schräge Gleitfläche 129 auf, die an der Schweißbrenner-Griffschale 212 unter elastischem Verbiegen des Hakens 128 abgleitet, bis der Haken 128 einrastet.

Die Achsenelemente 124 und der Haken 128 bilden Formschlusselemente 152 des Pistolengriffs 100 zu dessen formschlüssiger Befestigung am Schweißbrenner 210.

Auf diese Weise ist eine einfache und werkzeuglose Montage des Pistolengriffs 100 am Schweißbrenner 210 möglich.

In der Montageendstellung ist die Aktuatorfläche 148 gegenüber dem Brennertaster 222 angeordnet, so dass eine Betätigung des Brennertasterbetätigungshebels 144 an der Betätigungsfläche 144 eine Betätigung des Brennertaster 222 bewirkt.

Die Demontage des Pistolengriffs 100 kann ebenfalls werkzeuglos erfolgen, indem der Nutzer den Befestigungsbetätigungshebel 134 an der Betätigungsfläche 136 betätigt, wodurch der Haken 128 und die Gegenfläche 228 außer Eingriff gebracht werden und der Pistolengriff 100 zurück in die Montagezwischenstellung in Fig. 2b geschwenkt werden kann, aus der der Pistolengriff 100 durch Herausziehen der Achsenelemente 124 aus den Achsen-Aufnahmen 226 vom Schweißbrenner 210 getrennt werden kann.

Anstelle der Brennertasterbetätigung 140 kann am Pistolengriff auch ein Brennertaster vorgesehen sein, der elektrisch mit Kontaktierungsmitteln, zum Beispiel in Form zweier Kontaktstifte im Bereich der Montagekontur, verbunden ist. An der Schweißbrenner-Griffschale können dann entsprechend komplementäre Kontaktierungsmittel, zum Beispiel in Form zweier Kontaktflächen im Bereich der Montagegegenkontur, angeordnet sein, die von den Kontaktierungsmitteln kontaktiert werden, wenn der Pistolengriff 100 sich in der Montageentstellung befindet.

### Bezugszeichenliste:

- 100: Pistolengriff
- 102, 103: Halbschalen
- 104: Pistolengriffkörper
- 106: Montagekontur
- 108: Griffbereich
- 110: Grifffläche
- 112: Teilfläche
- 114: Teilfläche
- 116: Erhebungen
- 117: Vertiefungen
- 120: Befestigungsmittel
- 122: erste Befestigungselemente
- 124: Achsenelemente
- 126: zweites Befestigungselement
- 128: Haken
- 129: Gleitfläche
- 130: Befestigungsbetätigung
- 132: Achse
- 134: Befestigungsbetätigungshebel
- 136: Betätigungsfläche
- 138: Feder
- 140: Brennertasterbetätigung
- 142: Achse
- 144: Brennertasterbetätigungshebel
- 146: Betätigungsfläche
- 148: Aktuatorfläche
- 150: Feder
- 152: Formschlusselemente
- 160: Magazin
- 162: Magazinöffnung
- 164: Magazinaufnahme
- 166: Magazindeckel
- 168: Magazinbefestigungsmittel
- 170: Haken
- 172: Hinterschneidung
- 174: Betätigungsfläche
- 175: Aufnahme
- 176: Haltemittel
- 200: System
- 210: Schweißbrenner
- 212: Schweißbrenner-Griffschale
- 214: Brennervorsatz
- 216: vordere Seite
- 218: Schlauchpaket
- 220: hintere Seite
- 222: Brennertaster
- 224: Montagegegenkontur
- 226: Befestigungsgegenelemente
- 228: Gegenfläche
- 250: Zubehör

## Patentansprüche

1. Pistolengriff (100) für einen Schweißbrenner (210),
- mit einem Pistolengriffkörper (104), der eine Grifffläche (110) zum Greifen des Pistolengriffs (100) mit einer Hand aufweist, und
- mit einer Montagekontur (106) zur Montage des Pistolengriffs (100) an einem Schweißbrenner (210), insbesondere einer Schweißbrenner-Griffschale (212),
- wobei Befestigungsmittel (120) zur werkzeuglosen Befestigung des Pistolengriffs (100) an einem Schweißbrenner (210), insbesondere einer Schweißbrenner-Griffschale (212), vorgesehen sind,
**dadurch gekennzeichnet,**
- **dass** der Pistolengriff (100) eine manuell betätigbare Befestigungsbetätigung (130) zum Entriegeln und/oder Verriegeln der Befestigungsmittel (120) aufweist.

2. Pistolengriff nach Anspruch 1,
**dadurch gekennzeichnet, dass** der Pistolengriff (100) eine manuell betätigbare Brennertasterbetätigung (140) aufweist, die dazu ausgebildet ist, eine Betätigung der Brennertasterbetätigung (140) zu übertragen, insbesondere auf einen Brennertaster (222) eines Schweißbrenners (210), wenn der Pistolengriff (100) an dem Schweißbrenner (210) montiert ist, oder dass der Pistolengriff (100) einen manuell betätigbaren Brennertaster aufweist sowie Übertragungsmittel zur Übertragung einer Betätigung des Brennertasters auf einen Schweißbrenner (210).

3. Pistolengriff nach Anspruch 2,
**dadurch gekennzeichnet, dass** die Befestigungsbetätigung (130) und/oder die Brennertasterbetätigung (140) derart zur Grifffläche (110) angeordnet sind, dass die Befestigungsbetätigung (130) und/oder die Brennertasterbetätigung (140) mit einer Hand betätigbar sind.

4. Pistolengriff nach einem der Ansprüche 1 bis 3,
**dadurch gekennzeichnet, dass** die Befestigungsmittel (120) zur werkzeuglosen Befestigung des Pistolengriffs (100) ein oder mehrere Formschlusselemente (152) zur formschlüssigen Befestigung des Pistolengriffs (100) an einem Schweißbrenner (210) umfasst.

5. Pistolengriff nach einem der Ansprüche 1 bis 4,
**dadurch gekennzeichnet,**
- **dass** die Befestigungsmittel (120) ein oder mehrere erste Befestigungselemente (122) zum Einführen in korrespondierende Befestigungselemente (226) eines Schweißbrenners (210) in eine Montagezwischenstellung aufweisen, wobei die ein oder mehreren ersten Befestigungselemente (122) dazu ausgebildet sind, dass der Pistolengriff (100) aus der Montagezwischenstellung in eine Montageendstellung verschwenkbar ist, und
- **dass** die Befestigungsmittel (120) weiter ein oder mehrere zweite Befestigungselemente (126) aufweisen, die dazu ausgebildet sind, den Pistolengriff (100) in der Montageendstellung am Schweißbrenner (210) zu halten.

6. Pistolengriff nach einem der Ansprüche 1 bis 5,
**dadurch gekennzeichnet,**
- **dass** der Pistolengriff (100) ein Magazin (160) aufweist, das durch eine Magazinöffnung (162) im Pistolengriffkörper (104) in eine im Pistolengriffkörper (104) vorgesehene Magazinaufnahme (164) eingesetzt und/oder einsetzbar ist, wobei das Magazin (160) zur Aufnahme von Zubehör (250) ausgebildet ist.

7. Pistolengriff nach Anspruch 6,
**dadurch gekennzeichnet, dass** das Magazin (160) einen Magazindeckel (166) aufweist, der die Magazinöffnung (162) im Pistolengriffkörper (104) verschließt, wenn das Magazin (160) in die Magazinaufnahme (164) eingesetzt ist.

8. Pistolengriff nach Anspruch 6 oder 7,
**dadurch gekennzeichnet, dass** der Pistolengriffkörper (104) und das Magazin (160) komplementäre Magazinbefestigungsmittel (168) aufweisen, die dazu ausgebildet sind, das in die Magazinaufnahme (164) eingesetzte Magazin (160) in der Magazinaufnahme (164) zu befestigen, insbesondere formschlüssig.

9. System (200)
- mit einer Schweißbrenner-Griffschale (212) und/oder einem Schweißbrenner (210) und
- mit einem Pistolengriff (100) nach einem der Ansprüche 1 bis 8,
- wobei der Pistolengriff (100) dazu ausgebildet ist, an der Schweißbrenner-Griffschale (212) und/oder am Schweißbrenner (210) befestigt zu werden.

## Claims

1. Pistol grip (100) for a welding torch (210),
- having a pistol grip body (104) which has a grip surface (110) for gripping the pistol grip (100) with one hand, and
- having a mounting contour (106) for mounting the pistol grip (100) on a welding torch (210), in particular on a welding torch handle shell (212),
- wherein fastening means (120) are provided for tool-free fastening of the pistol grip (100) to a welding torch (210), in particular to a welding torch handle shell (212),
**characterized**
- **in that** the pistol grip (100) has a manually operable fastening actuator (130) for unlocking and/or locking the fastening means (120).

2. Pistol grip according to claim 1,
**characterized in that** the pistol grip (100) has a manually operable torch button actuator (140) which is designed to transmit an actuation of the torch button actuator (140), in particular to a torch button (222) of a welding torch (210), when the pistol grip (100) is mounted on the welding torch (210), or **in that** the pistol grip (100) has a manually operable torch button as well as transmission means for transmitting an actuation of the torch button to a welding torch (210).

3. Pistol grip according to claim 2,
**characterized in that** the fastening actuator (130) and/or the torch button actuator (140) are arranged relative to the grip surface (110) such that the fastening actuator (130) and/or the torch button actuator (140) can be actuated with one hand.

4. Pistol grip according to any one of claims 1 to 3,
**characterized in that** the fastening means (120) for tool-free fastening of the pistol grip (100) comprise one or more form-fit elements (152) for form-fitting fastening of the pistol grip (100) to a welding torch (210).

5. Pistol grip according to any one of claims 1 to 4,
**characterized**
- **in that** the fastening means (120) comprise one or more first fastening elements (122) for insertion into corresponding fastening elements (226) of a welding torch (210) into a mounting intermediate position, wherein the one or more first fastening elements (122) are designed such that the pistol grip (100) is pivotable from the mounting intermediate position into a mounting end position, and
- **in that** the fastening means (120) further comprise one or more second fastening elements (126) which are designed to hold the pistol grip (100) on the welding torch (210) in the mounting end position.

6. Pistol grip according to any one of claims 1 to 5,
**characterized**
- **in that** the pistol grip (100) comprises a magazine (160) which is inserted and/or insertable through a magazine opening (162) in the pistol grip body (104) into a magazine receptacle (164) provided in the pistol grip body (104), wherein the magazine (160) is designed to receive accessories (250).

7. Pistol grip according to claim 6,
**characterized in that** the magazine (160) has a magazine cover (166) which closes the magazine opening (162) in the pistol grip body (104) when the magazine (160) is inserted into the magazine receptacle (164).

8. Pistol grip according to claim 6 or 7,
**characterized in that** the pistol grip body (104) and the magazine (160) have complementary magazine fastening means (168) which are designed to fasten the magazine (160) inserted into the magazine receptacle (164) in the magazine receptacle (164), in particular in a form-fitting manner.

9. System (200)
- comprising a welding torch handle shell (212) and/or a welding torch (210), and
- comprising a pistol grip (100) according to any one of claims 1 to 8,
- wherein the pistol grip (100) is designed to be fastened to the welding torch handle shell (212) and/or to the welding torch (210).

## Revendications

1. Poignée de pistolet (100) pour un chalumeau de soudage (210),
- avec un corps de poignée de pistolet (104), qui présente une surface de prise (110) destinée à la préhension de la poignée de pistolet (100) avec une main, et
- avec un contour de montage (106) destiné au montage de la poignée de pistolet (100) au niveau d'un chalumeau de soudage (210), en particulier d'une coque de prise de chalumeau de soudage (212),
- dans laquelle des moyens de fixation (120) destinés à la fixation sans outil de la poignée de pistolet (100) au niveau d'un chalumeau de soudage (210), en particulier d'une coque de prise de chalumeau de soudage (212), sont prévus,
**caractérisée**
- **en ce que** la poignée de pistolet (100) présente un actionnement de fixation actionnable manuellement (130) destiné au déverrouillage et/ou au verrouillage des moyens de fixation (120).

2. Poignée de pistolet selon la revendication 1,
**caractérisée en ce que** la poignée de pistolet (100) présente un actionnement de bouton de chalumeau (140) actionnable manuellement qui est configuré pour transmettre un actionnement de l'actionnement de bouton de chalumeau (140), est monté en particulier sur un bouton de chalumeau (222) d'un chalumeau de soudage (210), lorsque la poignée de pistolet (100) est montée au niveau du chalumeau de soudage (210) ou **en ce que** la poignée de pistolet (100) présente un bouton de chalumeau actionnable manuellement ainsi que des moyens de transmission destinés à la transmission d'un actionnement du bouton de chalumeau à un chalumeau de soudage (210).

3. Poignée de pistolet selon la revendication 2,
**caractérisée en ce que** l'actionnement de fixation (130) et/ou l'actionnement de bouton de chalumeau (140) sont disposés par rapport à la surface de prise (110) de telle sorte que l'actionnement de fixation (130) et/ou l'actionnement de bouton de chalumeau (140) sont actionnables avec une main.

4. Poignée de pistolet selon l'une quelconque des revendications 1 à 3, **caractérisée en ce que** les moyens de fixation (120) destinés à la fixation sans outil de la poignée de pistolet (100) comprennent un ou plusieurs éléments à complémentarité de forme (152) destinés à la fixation par complémentarité de formes de la poignée de pistolet (100) à un chalumeau de soudage (210).

5. Poignée de pistolet selon l'une quelconque des revendications 1 à 4, **caractérisée**
- **en ce que** les moyens de fixation (120) présentent un ou plusieurs premiers éléments de fixation (122) destinés à être introduits dans des éléments de fixation correspondants (226) d'un chalumeau de soudage (210) dans une position intermédiaire de montage, dans laquelle les un ou plusieurs premiers éléments de fixation (122) sont configurés de telle sorte que la poignée de pistolet (100) peut pivoter de la position intermédiaire de montage dans une position finale de montage et
- **en ce que** les moyens de fixation (120) présentent en outre un ou plusieurs deuxièmes éléments de fixation (126) qui sont réalisés pour maintenir la poignée de pistolet (100) dans la position finale de montage au niveau du chalumeau de soudage (210).

6. Poignée de pistolet selon l'une quelconque des revendications 1 à 5, **caractérisée**
- **en ce que** la poignée de pistolet (100) présente un chargeur (160) qui est inséré et/ou est insérable à travers une ouverture de chargeur (162) dans le corps de poignée de pistolet (104) dans un logement de chargeur (164) prévu dans le corps de poignée de pistolet (104), dans lequel le chargeur (160) est réalisé pour la réception d'accessoires (250).

7. Poignée de pistolet selon la revendication 6,
**caractérisée en ce que** le chargeur (160) présente un couvercle de chargeur (166) qui verrouille l'ouverture de chargeur (162) dans le corps de poignée de pistolet (104) lorsque le chargeur (160) est inséré dans le logement de chargeur (164).

8. Poignée de pistolet selon la revendication 6 ou 7,
**caractérisée en ce que** le corps de poignée de pistolet (104) et le chargeur (160) présentent des moyens de fixation de chargeur complémentaires (168) qui sont configurés pour fixer dans le logement de chargeur (164), en particulier par complémentarité de formes, le chargeur (160) inséré dans le logement de chargeur (164).

9. Système (200)
- avec une coque de poignée de chalumeau de soudage (212) et/ou un chalumeau de soudage (210) et
- avec une poignée de pistolet (100) selon l'une quelconque des revendications 1 à 8,
- dans lequel la poignée de pistolet (100) est configurée pour être fixée à la coque de poignée de chalumeau de soudage (212) et/ou au chalumeau de soudage (210).
